# FASCICULE DE BREVET EUROPEEN

(11) **EP 1 204 713 B1**
(45) Date de publication et mention de la délivrance du brevet: **08.03.2006**
(21) Numéro de dépôt: 00956635.7
(22) Date de dépôt: 07.08.2000
(51) Int. Cl.: C09K 3/22

(54) **COMPOSITION ET PROCEDE ANTI-POUSSIERE POUR CEREALES**
ANTISTAUBZUSAMMENSETZUNG UND VERFAHREN FÜR CEREALIEN
COMPOSITION AND METHOD FOR ELIMINATING DUST WHEN HANDLING CEREALS

(30) Priorité: 09.08.1999 FR 9910333
(43) Date de publication de la demande: 15.05.2002
(73) Titulaire: Nufarm, 92230 Gennevilliers (FR)
(72) Inventeur: CHEMINAUD, Jean-Claude, F-95220 Herblay (FR); CHAILLOU, Daniel, F-95110 Sannois (FR)
(74) Mandataire: Koch, Gustave
(86) Numéro de dépôt international: PCT/FR2000/002266
(87) Numéro de publication internationale: WO 2001/010975

(56) Documents cités:
- EP-A- 0 197 188
- GB-A- 2 279 962
- US-A- 3 656 963
- US-A- 4 428 984
- US-A- 4 847 067
- DATABASE WPI Section Ch, Week 198912 Derwent Publications Ltd., London, GB; Class D13, AN 1989-089680 XP002137797 & JP 01 039957 A (NIPPON KAYAKU KK), 10 février 1989 (1989-02-10)

## Description

L'invention a pour objet l'utilisation d'une composition anti-poussière pour céréales, c' est-à-dire d'une composition qui permet de lutter contre la formation de poussières lors de la manipulation et du stockage des céréales.

Les céréales envisagées sont celles du groupe comprenant le blé, l'orge, l'avoine, le seigle et le maïs.

Il est connu que, lors de la manipulation et du stockage des céréales, la formation de poussières est importante.

Il s'agit là d'un inconvénient notoire qui peut avoir des conséquences graves et notamment conduire à des mélanges explosifs à l'intérieur des silos.

L'une des préoccupations permanentes de l'homme du métier est depuis toujours la lutte contre cette formation de poussières.

Aucune des solutions proposées jusqu'à ce jour n'est entièrement satisfaisante et simultanément bon marché.

L'invention a donc pour but, surtout, de remédier à cet inconvénient et de mettre à la disposition de l'industriel devant manipuler et stocker des céréales, des moyens correspondant mieux que ceux qui existent déjà aux divers desiderata de la technique.

Et la Société Demanderesse a eu le mérite de trouver que ce but était atteint en ayant recours à une solution aqueuse à très faible concentration en au moins l'un des composés du groupe d'agents auxiliaires alimentaires choisis parmi le sorbitol, le mannitol, l'isomalt, le maltitol, le lactitol, le xylitol et les esters de sorbitan éthoxylé.

L'invention vise l'utilisation pour un traitement permettant de lutter contre la formation de poussière pendant la manipulation et le stockage des céréales, de solutions aqueuses à très faible concentration, de préférence de 1 à 5 pour mille, plus préférentiellement de 2 à 4 pour mille, en une substance active comprenant au moins un des composés du groupe d'agents auxiliaires alimentaires choisis parmi le sorbitol, le mannitol, l'isomalt, le maltitol, le lactitol, le xylitol et les esters de sorbitan éthoxylé.

Le procédé anti-poussière conforme à l'invention est caractérisé par le fait que l'on applique par pulvérisation sur les céréales, avant ou pendant les manipulations auxquelles elles peuvent être soumises avant leur stockage, une solution aqueuse à très faible concentration en une substance active comprenant au moins l'un des composés du groupe d'agents auxiliaires alimentaires choisis parmi le sorbitol, le mannitol, l'isomalt, le maltitol, le lactitol, le xylitol et les esters de sorbitan éthoxylé, en une quantité telle qu'elle apporte par 1000 kg de céréales traitées de 5 à 1000 g, de préférence de 8 à 50 g de la susdite substance active.

L'invention pourra être encore mieux comprise grâce au complément de description qui suit et aux exemples non limitatifs mais concernant des modes de réalisation avantageux indiqués ci-après.

Il est connu d'évaluer le taux d'émission de poussière désigné par « indice de poussière » à partir d'un produit en vrac, par exemple d'un volume de céréales.

Pour ce faire, l'homme du métier a généralement recours à un appareil comprenant un cylindre rotatif de forme biconique qui est relié à un opacimètre.

On introduit, par exemple, 300 g de blé dans le cylindre biconique qui est alors mis en rotation à 30 tours/min pendant 5 minutes.

En raison de l'agitation due à la mise en rotation, la poussière provenant du blé s'accumule dans l'air qui se trouve au-dessus de la masse de céréales.

Une fois la rotation arrêtée, on déterrnine à l'aide de l'opacimètre la quantité de particules en suspension dans l'air surmontant la masse de céréales.

Les particules de poussière retombent progressivement.

Grâce à l'opacimètre, on connaît la quantité de particules en suspension à chaque instant.

On enregistre sur un graphique la courbe représentant la quantité de particules en fonction du temps jusqu'au moment où toutes les particules sont retombées, autrement dit jusqu'au moment auquel ladite courbe rencontre l'axe des abscisses.

L'« indice de poussière » est représenté par la longueur du segment, par exemple en mm, sur l'axe des abscisses entre le point qui correspond au maximum de la courbe (arrêt du cylindre biconique et démarrage de l'enregistrement) et celui qui correspond à l'endroit où la courbe rencontre l'axe des abscisses.

Le taux de protection conféré par le traitement anti-poussière est d'autant meilleur que le segment en question est court, c'est-à-dire l'indice de poussière faible.

Les échantillons de 300 g de céréales soumis à l'essai dont il vient d'être question sont préparés comme suit.

On charge, par exemple, 5 kg de blé sur un mélangeur horizontal muni de pales.

Dans une première expérience et en dehors de tout traitement anti-poussière, on maintient l'agitation pendant 5 minutes.

On charge les 5 kg de blé ainsi traités dans un sac en polyéthylène.

Dans une deuxième expérience, on charge de nouveau 5 kg de blé sur le mélangeur horizontal ; on démarre l'agitation et on pulvérise, par exemple à l'aide d'un pistolet à air comprimé, l'une des solutions utilisées conformément à l'invention.

A la fin de cette pulvérisation, on maintient l'agitation pendant 5 minutes supplémentaires.

Ici encore, les 5 kg de blé ayant subi le traitement anti-poussière sont conditionnés dans un sac en polyéthylène.

Cette deuxième expérience est répétée à l'identique avec chacune des solutions utilisées conformément à l'invention et destinées à être soumises aux tests.

On prélève ensuite un échantillon de 300 g de céréales dans chacun des sacs en polyéthylène dont il a été question ci-dessus et on soumet tous les échantillons à l'expérience décrite plus haut pour l'évaluation de l'indice de poussière en utilisant l'appareil comprenant le cylindre rotatif de forme biconique et l' opacimètre.

### EXEMPLE 1

C'est un échantillon de 300 g de blé n'ayant pas subi de traitement anti-poussière qui est soumis à l'évaluation décrite plus haut.

L'indice de poussière enregistré est 250.

### EXEMPLE 2

L'échantillon utilisé est prélevé sur 5 kg de blé soumis à un traitement anti-poussière consistant à pulvériser 8,5 g d'une solution à 3/1000 de monooléate de sorbitan éthoxylé à 20 moles.

Dans ce cas, la quantité de substance active pure appliquée correspond à 5 g pour 1000 kg de céréales.

L'indice de poussière enregistré est 20.

### EXEMPLE 3

Dans ce cas, les 5 kg de blé ont été soumis à un traitement anti-poussière consistant à pulvériser 62,5 g d'une solution à 4%o de monooléate de sorbitan éthoxylé à 20 moles d'oxyde d'éthylène.

La quantité de substance active pure appliquée correspond à 50 g pour 1000 kg de blé.

Il s'agit là d'une dose correspondant à celles couramment utilisées dans les applications de ce produit comme additif et auxiliaire alimentaire tel que décrit dans l'annexe III-D à l'arrêté du 02-10-1997.

L'indice de poussière enregistré est 5.

### EXEMPLE 4

On teste un échantillon qui provient de 5 kg de blé soumis à un traitement anti-poussière consistant à pulvériser 12,5 g d'une solution à 3%o d'un mélange 50/50 de sorbitol et de monooléate de sorbitan éthoxylé à 20 moles d'oxyde d'éthylène.

Dans ce cas, la quantité de substance active pure appliquée correspond à 7,5 g pour 1000 kg de céréales.

L'indice de poussière enregistré est 30.

Un certain nombre d'essais complémentaires ont été réalisés en effectuant des traitements anti-poussière avec d'autres esters de sorbitan à différentes doses et avec le sorbitol seul.

Dans le tableau I ci-après, on a identifié les produits testés, les doses appliquées et les indices de poussière enregistrés.

**TABLEAU I**

| Exemple | Produit essayé | Dose (en gramme de substance active par tonne de céréales) | Temps (t') | Indice de poussière (en opacimètre) |
|---|---|---|---|---|
| 5 | Monooléate de sorbitan 20 OE | 5 | | 20 |
| 6 | Monooléate de sorbitan 20 OE | 50 | | 5 |
| 7 | Monooléate de sorbitan 20 OE | 50 | | 10 |
| 8 | Sorbitol | 7,5 | | 50 |
| 9 | Monooléate de sorbitan 20 OE | 12,5 | | 15 |
| 10 | Sorbitol Monooléate de sorbitan 20 OE | 3,75 30 3,75 | | 30 |
| 11 | Monostéarate de sorbitan 20 OE | 50 | | 15 |
| 12 | Monolaurate de de sorbitan 20 OE | 50 | | 25 |
| 13 | Monopalmitate de sorbitan 20 OE | 50 | | 30 |

A l'examen de ce tableau, il apparaît que le monooléate de sorbitan éthoxylé à 20 molécules d'oxyde d'éthylène donne les meilleurs résultats.

La Société Demanderesse a également procédé à un essai à l'échelle industrielle décrit ci-après à l'exemple 14.

### EXEMPLE 14

Cet exemple montre qu'il est possible, grâce à l'invention, de contrôler dans des silos à blé les émissions de poussières pendant plusieurs heures.

Il illustre plus particulièrement l'efficacité de l'invention pour lutter contre l'émission de poussières par des céréales lors du remplissage d'un silo.

On introduit dans un silo, à un débit de 200 tonnes/heure du blé tendre de qualité brute non lavé, non tamisé.

Simultanément à l'introduction du blé, on pulvérise à l'intérieur du silo, conformément à l'invention, une solution aqueuse ayant une concentration de 2,8 à 3,8 g/l en monooléate de sorbitan 20 OE avec un débit de 600 litres/heure.

Pour réaliser la pulvérisation, on utilise le système de pulvérisation commercialisé sous la marque SILO RAM® par la Société CARUELLE, dont le siège est à 45550 Saint Denis de l'Hotel.

Pour ce faire, le système de pulvérisation est installé dans l'ouverture de la goulotte d'alimentation en grains du silo.

On procède à quatre essais, la durée de chacun étant d'environ 1 heure.

On mesure l'empoussièrement alvéolaire, c'est-à-dire la concentration en particules de diamètre inférieur à 10 microns) en utilisant un appareil constitué par un détecteur laser fabriqué par la Société Turnkey Ltd. dont le siège est à 1-2 Dalby Court, Gadbrook Business centre, Northwich, CHESHIRE CW9 7 TN, Royaume-Uni, cet appareil étant commercialisé sous la dénomination LN 10 par la Société Equipements Techniques dont le siège est à 92380 Garches.

La concentration de l'additif dans l'eau est contrôlée par prélèvement du liquide de pulvérisation et dosage spectrophotométrique.

Dans les trois premiers essais, désignés par A, B et C, on a appliqué des quantités croissantes d'additif et dans le quatrième, D, la solution de pulvérisation ne comporte pas d'additif.

Les résultats sont réunis dans le tableau II.

**TABLEAU II**

| Essais | Dose moyenne d'additif (g/tonne) | Concentration moyenne en poussières alvéolaires (mg/m³) |
|---|---|---|
| A | 8,5 | 40 |
| B | 11,3 | 25 |
| C | 12,1 | 15 |
| D | 0 | 250 |

A la lecture des résultats réunis dans le tableau II, on constate que l'essai C (dose de 12 ppm d'additif), fournit des résultats très satisfaisants (empoussièrement de l'ordre de 15 mg par m³), sachant que la teneur en poussières pouvant entraîner une explosion se situe aux environs de 30 g/m³.

## Revendications

1. Utilisation pour lutter contre la formation de poussière pendant la manipulation et le stockage des céréales, d'une solution aqueuse ayant une concentration de 1 à 5 pour mille (g/l) en une substance active comprenant au moins un des composés du groupe d'agents auxiliaires alimentaires choisis parmi le sorbitol, le mannitol, l'isomalt, le maltitol, le lactitol, le xylitol et les esters de sorbitan éthoxylé.

2. Utilisation pour lutter contre la formation de poussière pendant la manipulation et le stockage des céréales, d'une solution aqueuse ayant une concentration de 2 à 4 pour mille, en une substance active comprenant au moins un des composés du groupe d'agents auxiliaires alimentaires choisis parmi le sorbitol, le mannitol, l'isomalt, le maltitol, le lactitol, le xylitol et les esters de sorbitan éthoxylé.

## Patentansprüche

1. Verwendung einer wässrigen Lösung mit einer Konzentration von 1 bis 5 pro tausend (g/l) eines Wirkstoffs, umfassend mindestens eine der Verbindungen aus der Gruppe von Nahrungsmittelhilfsstoffen, ausgewählt aus Sorbitol, Mannitol, Isomalt, Maltitol, Lactitol, Xylitol und ethoxylierten Sorbitanestern, zur Bekämpfung der Staubbildung bei der Handhabung und Lagerung von Cerealien.

2. Verwendung einer wässrigen Lösung mit einer Konzentration von 2 bis 4 pro tausend eines Wirkstoffs, umfassend mindestens eine der Verbindungen aus der Gruppe von Nahrungsmittelhilfsstoffen, ausgewählt aus Sorbitol, Mannitol, Isomalt, Maltitol, Lactitol, Xylitol und ethoxylierten Sorbitanestern, zur Bekämpfung der Staubbildung bei der Handhabung und Lagerung von Cerealien.

## Claims

1. Use of an aqueous solution having a concentration from 1 to 5 parts per thousand (g/l) of an active substance comprising at least one of the compounds from the group of food auxiliaries chosen from sorbitol, mannitol, isomalt, maltitol, lactitol, xylitol and ethoxylated sorbitan esters, for combating the formation of dust during the handling and storage of grain.

2. Use of an aqueous solution having a concentration from 2 to 4 parts per thousand of an active substance comprising at least one of the compounds from the group of food auxiliaries chosen from sorbitol, mannitol, isomalt, maltitol, lactitol, xylitol and ethoxylated sorbitan esters, for combating the formation of dust during the handling and storage of grain.
